# EUROPÄISCHE PATENTSCHRIFT

(11) **EP 3 556 209 B1**
(45) Veröffentlichungstag und Bekanntmachung des Hinweises auf die Patenterteilung: **30.09.2020**
(21) Anmeldenummer: 19401014.6
(22) Anmeldetag: 11.04.2019
(51) Int. Cl.: A01M 7/00

(54) **VERFAHREN UND VORRICHTUNG ZUR ABSTANDSMESSUNG AN EINEM LANDWIRTSCHAFTLICHEN VERTEILERGESTÄNGE**
METHOD AND DEVICE FOR MEASURING DISTANCE ON AN AGRICULTURAL DISTRIBUTION MACHINE
PROCÉDÉ ET DISPOSITIF DESTINÉS À LA MESURE DE DISTANCE SUR UN ÉPANDEUR AGRICOLE

(30) Priorität: 16.04.2018 DE 102018108943
(43) Veröffentlichungstag der Anmeldung: 23.10.2019
(73) Patentinhaber: Amazonen-Werke H. Dreyer GmbH & Co. KG, 49205 Hasbergen (DE)
(72) Erfinder: Rahe, Florian, 49504 Lotte (DE); Trentmann, Markus, 49134 Wallenhorst (DE)

(56) Entgegenhaltungen:
- EP-A2- 1 978 433
- WO-A1-2014/001416
- DE-A1-102016 116 808
- DE-B3-102008 009 753

## Beschreibung

Die Erfindung betrifft ein Verfahren und eine Vorrichtung zur Abstandsmessung zwischen einem landwirtschaftlichen Verteilergestänge und einem Pflanzenbestand und/oder Ackerboden gemäß den Oberbegriffen der Ansprüche 1 und 12 sowie ein Speichermedium mit einem Programm zur Berechnung eines lichten Abstands zwischen dem landwirtschaftlichen Verteilergestänge und einem Pflanzenbestand und/oder Ackerboden.

Ein gattungsgemäßes Verfahren und eine gattungsgemäße Vorrichtung sind aus der WO 2014/001416 A1 bekannt. Demnach werden Ultraschallsensoren am Verteilergestänge einer Feldspritze platziert, um Ultraschallimpulse auszusenden und an Pflanzenbestand und/oder Boden reflektierte Reflexionsimpulse zu empfangen. Aus der Laufzeit der Ultraschallimpulse zwischen Abgabe und Empfang lässt sich mithilfe der Schallgeschwindigkeit der lichte Abstand zwischen dem Verteilergestänge und dem jeweiligen Pflanzenbestand bzw. Boden auf an sich bekannte Weise berechnen.

Diesbezüglich beschreibt die WO 2014/001416 A1 ferner, dass für jeden abgegebenen Signalimpuls mehrere Reflexionsimpulse nacheinander empfangen werden können, beispielsweise aufgrund von Reflexionen am Boden, an den Blättern des Pflanzenbestands sowie an dessen Früchten. Dem zuerst eintreffenden Reflexionsimpuls wird dann beispielsweise die Oberkante des Pflanzenbestands zugeordnet und dem zuletzt eintreffenden Reflexionsimpuls der Ackerboden darunter.

Problematisch ist bei einer derartigen Abstandsmessung zum Verteilergestänge, dass die einzelnen Reflexionsimpulse nicht immer fehlerfrei der Oberkante des Pflanzenbestands oder dem darunterliegenden Ackerboden zugeordnet werden können. Daraus resultieren Fehlmessungen, die bei der WO 2014/001416 A1 durch Mittelwerte aus vorangegangenen Messungen ersetzt werden.

Anstelle einer solchen statistischen Korrektur von Fehlmessungen wäre es jedoch wünschenswert, diese möglichst zu vermeiden oder zumindest ihre Häufigkeit zu reduzieren. Dies ist insbesondere vor dem Hintergrund zu sehen, dass der lichte Abstand des Verteilergestänges zum Pflanzenbestand bzw. Boden hin während des Arbeitsbetriebs laufend gemessen werden soll, um die Neigung des Verteilergestänges zur Einhaltung eines Sollabstands anzupassen und dabei das Verteilergestänge möglichst ruhig über den Pflanzenbestand bzw. Boden zu führen, also mit möglichst geringen Korrekturbewegungen.

Es besteht daher Bedarf für alternative und insbesondere verbesserte Verfahren und Vorrichtungen zur Abstandsmessung zwischen einem landwirtschaftlichen Verteilergestänge und einem Pflanzenbestand und/oder Boden.

Die gestellte Aufgabe wird mit einem Verfahren gemäß Anspruch 1 gelöst. Demnach dient dieses zur Abstandsmessung zwischen einem landwirtschaftlichen Verteilergestänge und einem Pflanzenbestand und/oder Boden. Zu diesem Zweck werden Laufzeiten von am Verteilergestänge ausgesandten Signalimpulsen und nach deren Reflexion am Pflanzenbestand und/oder Boden empfangenen Reflexionsimpulsen gemessen. Ferner wird daraus ein lichter Abstand zum Verteilergestänge hin berechnet, wobei beim Empfang mehrerer einem bestimmten Signalimpuls zugeordneter Reflexionsimpulse jeweils einer der Reflexionsimpulse mittels einer programmierten Auswahlregel für die Laufzeitmessung ausgewählt wird.

Erfindungsgemäß wird die Auswahlregel aus einer gespeicherten Liste mit bestandspezifischen Auswahlregeln ausgewählt. Es wird somit wenigstens eine erste Auswahlregel für eine erste Art zu behandelnden Pflanzenbestands und eine zweite Auswahlregel für eine zweite Art zu behandelnden Pflanzenbestands zur Auswahl vorgehalten, beispielsweise zentral in einer zugeordneten Steuereinheit und/oder dezentral in Sensoren für die Laufzeitmessung.

Die Art des tatsächlich vorliegenden Pflanzenbestands kann bedienerseitig eingegeben werden und/oder automatisch ermittelt werden, beispielsweise mithilfe zuvor am Pflanzenbestand reflektierter und in der Steuereinheit und/oder den Sensoren ausgewerteter Reflexionsimpulse. Die Art des Pflanzenbestands kann durch die angebaute Frucht definiert sein, beispielsweise in Form einer bestimmten Getreidesorte, und/oder durch die vorliegende Wuchsform des Pflanzenbestands, beispielsweise hinsichtlich eines Anteils von Blättern und/oder Halmen und/oder Früchten.

Zusätzlich zum lichten Abstand kann wenigstens ein weiterer Abstand zum Verteilergestänge hin gemessen werden, beispielsweise vom Boden unter dem Pflanzenbestand aus. Für die diesbezügliche Laufzeitmessung kann eine gesonderte Auswahlregel verwendet werden.

Der Erfindung liegt die Überlegung zugrunde, dass nicht zwangsläufig immer der zuerst eintreffende Reflexionsimpuls die genaueste und/oder zuverlässigste Abstandsmessung zwischen Verteilergestänge und Oberkante des Pflanzenbestands ermöglicht. Je nach vorliegendem Pflanzenbestand und/oder Boden kann sich dafür auch ein Reflexionsimpuls mit einer anderen charakteristischen Eigenschaft besonders gut eignen, beispielsweise der jeweils stärkste Reflexionsimpuls oder ein Reflexionsimpuls mit einer bestimmten Dauer.

Mit einer bestandspezifisch ausgewählten Auswahlregel kann die Fehlerhäufigkeit bei der Laufzeitmessung reduziert werden. Folglich kann der lichte Abstand zwischen dem Verteilergestänge und der Oberkante des Pflanzenbestands und/oder zum Boden hin zuverlässiger gemessen werden. Korrekturbewegungen des Verteilergestänges zur Einhaltung eines Sollabstands können daher passend berechnet und das Verteilergestänge somit Vergleichsweise ruhig und gleichmäßig über den Pflanzenbestand / Boden geführt werden.

Die Liste mit bestandspezifischen Auswahlregeln wird vorzugsweise in einer dem Verteilergestänge zugeordneten Steuerung und/oder Messeinrichtung vorgehalten, insbesondere in programmierbaren Ultraschallsensoren. Spezifisch für den jeweiligen Pflanzenbestand ist insbesondere die auf dem Boden angebaute Frucht. Beispielsweise kann die Liste wenigstens eine Blattfrucht, wenigstens eine Halmfrucht und wenigstens einen Ackerboden zur Auswahl enthalten.

Je nach Wuchsform bzw. Entwicklungszustand des Pflanzenbestands können für eine bestimmte Frucht auch entsprechend unterschiedliche Auswahlregeln vorgehalten werden.

Dem bedienerseitig ausgewählten und/oder maschinell ermittelten Pflanzenbestand wird dann automatisch eine der gespeicherten Auswahlregeln zugeordnet und bei der Laufzeitmessung angewendet. Die Auswahlregeln können somit als Bestandteile bestandabhängiger Auswertealgorithmen angesehen werden, von denen jeweils einer zur Anwendung kommt. Vorzugsweise wird der relevante Reflexionsimpuls anhand seines Zeitrangs und/oder seiner Amplitude bzw. Signalstärke aus einer Abfolge von dem Signalpuls zugeordneten Reflexionsimpulsen ausgewählt. Beispielsweise kann unterschieden werden, ob ein für den jeweil i-gen Pflanzenbestand charakteristischer Reflexionsimpuls üblicherweise als jeweils erster Reflexionsimpuls oder als zweiter Reflexionsimpuls empfangen wird. Ebenso kann für einen bestimmten Pflanzenbestand ein Reflexionsimpuls mit einer vorgegebenen relativen Amplitude und/oder Signalstärke, beispielsweise gemessen als Effektivwert der elektrischen Leistung (RMS), mittels Auswahlregel für die Laufzeitmessung ausgewählt werden. Vorzugsweise wird dann der jeweils zuerst eintreffende Reflexionsimpuls oder der jeweils stärkste Reflexionsimpuls, beispielsweise derjenige mit der größten Signalamplitude, aus der zusammengehörenden Abfolge von Reflexionsimpulsen ausgewählt. Beispielsweise lässt sich der Abstand zur Oberkante eines Pflanzenbestands mit Halmfrüchten oftmals anhand des jeweils zuerst eintreffenden Reflexionsimpulses besonders zuverlässig bestimmen. Entsprechend lässt sich der Abstand zur Oberkante eines Pflanzenbestands mit Blattfrüchten oftmals anhand des stärksten Reflexionsimpulses, also desjenigen mit der größten Signalamplitude, besonders zuverlässig ermitteln.

Ebenso wäre es denkbar, die Auswahlregel dynamisch anzupassen, indem beispielsweise der zuerst eintreffende Reflexionsimpuls und/oder der zuletzt eintreffende Reflexionsimpuls und/oder der stärkste Reflexionsimpuls und/oder ein zeitlicher Abstand zwischen bestimmten Reflexionsimpulsen analysiert wird, um auf dieser Grundlage einen Reflexionsimpuls aus der Abfolge von Reflexionsimpulsen für die Laufzeitberechnung auszuwählen.

Vorzugsweise enthält die Liste wenigstens eine erste Auswahlregel für Halmfrüchte und eine zweite Auswahlregel für Blattfrüchte. Hierbei ist es sowohl möglich, Auswahlregeln gemeinsam für mehrere Halmfrüchte abzuspeichern, als auch Auswahlregeln für einzelne Halmfrüchte. Dies ist analog ebenso für Blattfrüchte möglich. Typische Halmfrüchte sind insbesondere Getreidesorten, wie beispielsweise Gerste, Weizen und Hafer. Typische Blattfrüchte sind beispielsweise Kartoffeln, Mais, Raps oder Zuckerrüben. Ebenso können separate Auswahlregeln für bestimmte Wuchshöhen / Entwicklungszustände einzelner Pflanzenbestände zur Auswahl gespeichert sein.

Vorzugsweise wird die Auswahlregel infolge manueller Eingabe an einer dem Verteilergestänge zugeordneten Steuerung bestandspezifisch ausgewählt. Beispielsweise wird vorab eine auf dem jeweiligen Ackerboden angebaute Frucht eingegeben, beispielsweise eine bestimmte Blattfrucht oder Halmfrucht, gegebenenfalls auch deren Entwicklungszustand. Dem Bediener könnten geeignete Eingabevorschläge mit Pflanzenbeständen angezeigt werden.

Ergänzend oder alternativ kann die Auswahlregel auch auf der Grundlage einer maschinellen Erkennung des Pflanzenbestands und/oder Bodens von einer dem Verteilergestänge zugeordneten Steuerung automatisch aus der Liste ausgewählt werden. Eine automatische Erkennung ist beispielsweise anhand einer charakteristischen Abfolge nach Abgabe eines Signalimpulses empfangener Reflexionsimpulse denkbar. Folglich lassen sich fehlerhafte manuelle Eingaben vermeiden oder gegebenenfalls prüfen bzw. korrigieren sowie der Bedienkomfort insgesamt verbessern.

Vorzugsweise wird der Pflanzenbestand und/oder Boden anhand einer für den Pflanzenbestand und/oder Boden charakteristischen Dauer, Signalstärke und/oder zeitlichen Abfolge empfangender Reflexionsimpulse erkannt. Beispielsweise können für den jeweiligen Pflanzenbestand charakteristischen Impulsmuster für einen ausgesandten Signalimpuls zugeordnete Reflexionsimpulse vorgegeben und mit den jeweils empfangenen Reflexionsimpulsen verglichen werden. Zur Ermittlung der Dauer, der Signalstärke und/oder zeitlichen Abfolge einzelner Reflexionsimpulse können diese beispielsweise als Effektivwerte ihrer elektrischen Leistung (RMS) ausgewertet werden und/oder deren Länge zwischen vorgegebenen Schwellenwerten der Signalamplitude und/oder des Effektivwerts der elektrischen Leistung gemessen werden.

Ebenso ist es denkbar, den Pflanzenbestand und/oder Boden automatisch auf der Grundlage eines für den Pflanzenbestand und/oder Boden charakteristischen akustischen und/oder elektromagnetischen Reflexionsspektrums zu erkennen. Beispielsweise kann der Pflanzenbestand bestimmte Spektralanteile der ausgesandten Ultraschallwellen bevorzugt absorbieren oder reflektieren.

Ebenso wäre es möglich, den Pflanzenbestand und/oder Boden anhand digitaler Bildaufnahme vom Verteilergestänge aus und mittels zugehöriger Bildauswertung zu erkennen.

Die oben genannten Varianten zur automatischen Erkennung des vorliegenden Pflanzenbestands lassen sich je nach Anwendungsbereich auch miteinander kombinieren, um bestimmte Pflanzenbestände, deren Wuchsform und/oder Ackerböden zuverlässig zu erkennen.

Vorzugsweise umfassen die Signalimpulse und Reflexionsimpulse Ultraschallwellen und/oder elektromagnetische Wellen, insbesondere Laserlicht. Sowohl akustische Wellen als auch elektromagnetische Wellen eignen sich prinzipiell zur Laufzeitmessung und einer darauf basierenden Abstandsmessung zwischen dem Verteilergestänge und der Oberkante eines Pflanzenbestands und/oder dem befahrenen Boden, gegebenenfalls auch in Kombination miteinander.

Das Verfahren dient vorzugsweise ferner zur Führung eines landwirtschaftlichen Verteilergestänges über einen Ackerboden, wobei ein lichter Abstand zur Oberkante eines Pflanzenbestands und/oder zum Boden mit dem Verfahren gemäß wenigstens einer der voranstehend beschriebenen Ausführungsformen gemessen und auf dieser Grundlage die Höhe und/oder Neigung des Verteilergestänges geregelt wird.

Dies dient insbesondere der Einhaltung eines lichten Sollabstands, also eines Sollabstands zwischen der Unterkante des Verteilergestänges und der Oberkante des Pflanzenbestands und/oder dem Boden. Mit einem derartigen Verfahren lassen sich Abstandsschwankungen, also Abweichungen vom jeweiligen Sollabstand, minimieren und somit auch die zur beabsichtigten Einhaltung des Sollabstands nötigen Stellbewegungen des Verteilergestänges. Die gestellte Aufgabe wird ebenso mit einer Vorrichtung gemäß Anspruch 12 gelöst. Demnach dient dieses zur Abstandsmessung zwischen einem landwirtschaftlichen Verteilergestänge und einem Pflanzenbestand und/oder Boden. Die Vorrichtung umfasst wenigstens eine am Verteilergestänge angeordnete Messeinrichtung zur Ermittlung von Laufzeiten von ausgesandten Signalimpulsen und nach deren Reflexion am Pflanzenbestand und/oder Boden empfangenen Reflexionsimpulsen. Die Vorrichtung ist ferner eingerichtet, daraus einen lichten Abstand zum Verteilergestänge hin zu berechnen und dafür beim Empfang einer Abfolge mehrerer einem bestimmten Signalimpuls zugeordneter Reflexionsimpulse jeweils einen davon mittels einer programmierten Auswahlregel auszuwählen und zur Laufzeitmessung heranzuziehen.

Erfindungsgemäß ist die Vorrichtung ferner zur Auswahl der Auswahlregel aus einer gespeicherten Liste mit bestandspezifischen Auswahlregeln eingerichtet. Damit lassen sich die bezüglich des Anspruchs 1 beschriebenen Vorteile erzielen.

Die Vorrichtung ist vorzugsweise Bestandteil einer Feldspritze, die dann zudem ein Verteilergestänge umfasst sowie eine Steuerung zur Neigungs- und/oder Höhenregelung des Verteilergestänges auf der Grundlage des gemessenen lichten Abstands zwischen Verteilergestänge und dem Pflanzenbestand und/oder Boden. Die Feldspritze ermöglicht eine besonders gleichmäßige Führung des Verteilergestänges über den Pflanzenbestand und/oder Boden.

Vorzugsweise ist die Messeinrichtung ferner zur manuellen Eingabe und/oder zur automatischen Erkennung des vorliegenden Pflanzenbestands und/oder Bodens und zur darauf basierenden automatischen Auswahl der jeweils anzuwendenden Auswahlregel eingerichtet. Beispielsweise könnte ein Eingabevorschlag für einen Bediener auf der Grundlage einer automatischen Erkennung des Pflanzenbestands angezeigt und vom Bediener bestätigt oder auf geeignete Weise korrigiert werden.

Die gestellte Aufgabe wird ebenso mit einem Speichermedium nach Anspruch 15 gelöst. Gespeichert sind darauf computerlesbare Instruktionen zum Durchführen eines Verfahrens nach wenigstens einer der voranstehend beschriebenen Ausführungsformen, wenn die Instruktionen auf einem Computer bzw. in einer Steuerung ausgeführt werden.

Die Steuerung ist beispielsweise eine zentrale Steuerung einer Feldspritze, eine zentrale Steuerung der beschriebenen Messeinrichtung, eine Steuerung wenigstens eines Sensors, insbesondere Ultraschallsensors, zur Laufzeitmessung zwischen dem Verteilergestänge und dem Pflanzenbestand oder dergleichen.

Eine bevorzugte Ausführungsform der Erfindung ist zeichnerisch dargestellt. Es zeigen:
- Figur 1: eine schematische Teilansicht eines Verteilergestänges mit ausgesandten Signalimpulsen und an Pflanzenbestand reflektierten Reflexionsimpulsen;
- Figur 2: eine nichtmaßstäbliche Darstellung einer Abfolge von Reflexionsimpulsen; und
- Figur 3: eine Liste mit unterschiedlichen Pflanzenbeständen zur Auswahl einer jeweils zugeordneten Auswahlregel.

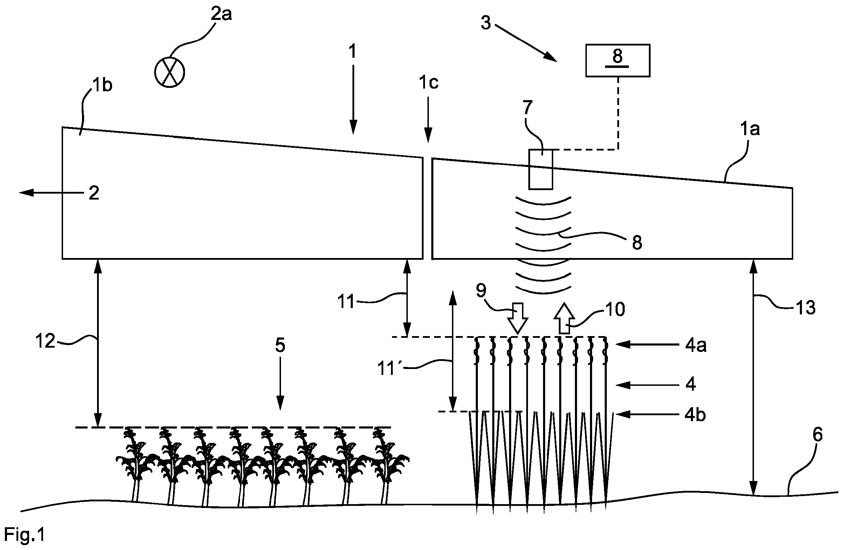

Die Figur 1 zeigt schematisch den äußeren Bereich eines Verteilergestänges 1, das sich auf bekannte Weise beidseitig einer (nicht figürlich dargestellten) Feldspritze 2 quer zu deren Fahrtrichtung 2a erstreckt.

Vom Verteilergestänge 1 sind der Einfachheit halber nur ein äußeres Segment 1a, ein nach innen daran anschließendes Segment 1b sowie ein die Segmente 1a und 1b verbindendes Gelenk 1c zum an sich bekannten horizontalen Einklappen des Gestänges 1 dargestellt. Der prinzipielle Aufbau des Verteilergestänges 1 aus einer Vielzahl von Streben und Trägern in Leichtbauweise oder dergleichen ist ebenso bekannt und daher nicht im Detail erläutert.

Das Verteilergestänge 1 umfasst eine Messeinrichtung 3 zur Abstandsmessung zwischen dem Verteilergestänge 1 und einem ersten Pflanzenbestand 4 und/oder einem zweiten Pflanzenbestand 5 und/oder dem vom Verteilergestänge 1 überstrichenen Boden 6 mittels prinzipiell bekannter Laufzeitmessung akustischer und/oder elektromagnetischer Wellenzüge.

Der erste Pflanzenbestand 4 ist beispielhaft als Halmfrucht dargestellt, der zweite Pflanzenbestand 5 als Blattfrucht. Die Pflanzenbestände 4, 5 unterscheiden sich somit hinsichtlich ihrer prinzipiellen Wuchsform.

Die Messeinrichtung 3 umfasst auf beiden Seiten des Verteilergestänges 1 jeweils wenigstens einen vorzugsweise programmierbaren Ultraschallsensor 7 mit Sende- und Empfangsfunktion sowie eine an beliebiger Stelle platzierbare Steuerung 8. Die Steuerung 8 könnte zentral und/oder dezentral ausgebildet sein, beispielsweise in die Ultraschallsensoren 7 integriert und/oder auf mehrere Geräteeinheiten verteilt sein.

Wie in der Figur 1 schematisch angedeutet ist, beruht die Abstandsmessung auf der Abgabe von Signalimpulsen 9 und dem Empfang einer Abfolge 10 von Reflexionsimpulsen, die örtlich und zeitlich versetzt am Pflanzenbestand 4, 5 und/oder am Boden 6 reflektiert werden. Je nach Art und Beschaffenheit des Pflanzenbestands 4, 5 und des Bodens 6 kann die an der Messeinrichtung 3 pro Signalimpuls 9 empfangene Abfolge 10 eine beliebige Anzahl von Reflexionsimpulsen umfassen, gegebenenfalls aber auch nur einen einzigen.

Um einen im jeweiligen Arbeitsbetrieb relevanten lichten Abstand 11, 12 oder 13 zwischen dem Verteilergestänge 1 und dem Pflanzenbestand 4, 5 oder dem Boden 6 zu berechnen, ist somit eine Laufzeit bis zum Empfang des jeweils relevanten Reflexionsimpulses zu messen.

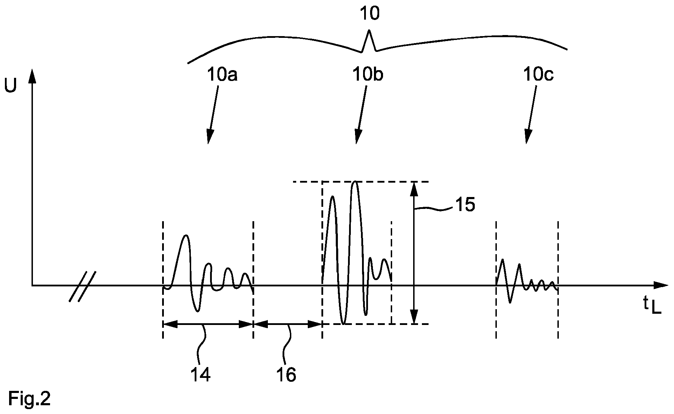

Die Figur 2 zeigt ein empfangsseitiges Spannung-Zeit-Diagramm für die Signalamplitude U in der Messeinrichtung 3 und die Laufzeit t_{L}. Demnach empfängt die Messeinrichtung 3 für jeden ausgesandten Signalimpuls 9 nach Reflexion am Pflanzenbestand 4, 5 und/oder Boden 6 eine Abfolge 10 von beispielsweise drei Reflexionsimpulsen 10a-10c. Es wird daher eine Auswahlregel angewendet, die festlegt, welcher der empfangenen Reflexionsimpulse 10a-10c für die Laufzeitmessung beim vorliegenden Pflanzenbestand 4, 5 zu verwenden ist.

Im Beispiel resultiert ein zuerst empfangener Reflexionsimpuls 10a aus der Reflexion eines Signalimpulses 9 an der Oberkante 4a des Pflanzenbestands 4, ein darauffolgender Reflexionsimpuls 10b aus der Reflexion desselben Signalimpulses 9 in einem mittleren Bereich 4b des Pflanzenbestands 4, und ein zuletzt empfangener Reflexionsimpuls 10c aus der Reflexion desselben Signalimpulses 9 am Boden 6, siehe hierzu auch die Figur 1.

Im Arbeitsbetrieb der Feldspritze 2 ist für die Neigungs- und/oder Höhenregelung des Verteilergestänges 1 beispielsweise der lichte Abstand 11 zwischen dem Verteilergestänge 1 und der Oberkante 4a des Pflanzenbestands 4 laufend zu ermitteln, im Gegensatz zu einem der Vollständigkeit halber ebenso angedeuteten Abstand 11' zwischen dem Verteilergestänge 1 und dem mittleren Bereich 4b des Pflanzenbestands 4 mit tieferliegenden Blättern oder dergleichen. Im vorliegenden Beispiel hat der Pflanzenbestand 4 somit im mittleren Bereich 4b eine andere Wuchsform als an seiner für die Abstandsmessung relevanten Oberkante 4a.

In der Messeinrichtung 3 werden die einzelnen Reflexionsimpulse 10a-10c auf prinzipiell bekannte Weise analysiert. Beispielsweise wird die Dauer 14 der einzelnen Reflexionsimpulse 10a-10c gemessen, deren jeweilige Amplitude U oder Signalstärke 15, gegebenenfalls auch in Form des Effektivwerts der elektrischen Leistung (RMS), Abstände 16 zwischen aufeinanderfolgenden Reflexionsimpulsen 10a-10c, und/oder deren Zeitränge in der Abfolge 10, also ob es sich beispielsweise um den jeweils zuerst oder zuletzt empfangen Reflexionsimpuls 10a, 10c einer zusammengehörenden Abfolge 10 handelt.

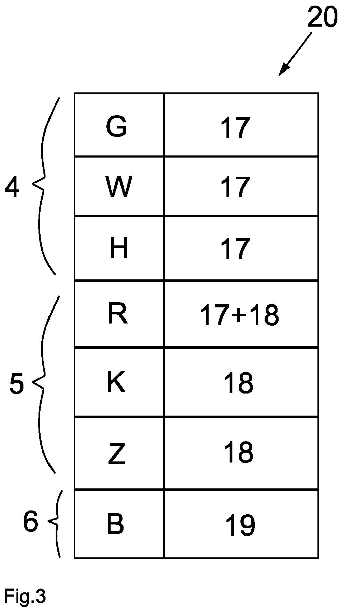

Der Erfindung liegt der Gedanke zugrunde, für unterschiedliche Pflanzenbestände 4, 5 und/oder den Boden 6 bestandsspezifische Auswahlregeln 17, 18, 19 in einer gespeicherten Liste 20 zur selektiven Anwendung für die jeweils relevante Laufzeitmessung bereitzustellen, wie schematisch in der Figur 3 dargestellt ist.

Die Liste 20 ist beispielsweise zentral in der Steuerung 8, dezentral in den Ultraschallsensoren 7 und/oder anderweitig im Bereich der Feldspritze 2 gespeichert.

Demnach enthält die Liste 20 wenigstens eine erste Auswahlregel 17 für den ersten Pflanzenbestand 4, beispielsweise in Form von bedienerseitig auswählbaren Halmfrüchten, nämlich Gerste G, Weizen W und Hafer H. Ferner enthält die Liste 20 wenigstens eine zweite Auswahlregel 18 für den zweiten Pflanzenbestand 5, im Beispiel auswählbare Blattfrüchte, nämlich Raps R, Kartoffeln K, und Zuckerrüben Z. Schließlich enthält die Liste 20 vorzugsweise auch eine Auswahlregel 19 für bedienerseitig auswählbaren Boden B.

Halmfrüchte, Blattfrüchte und der Boden könnten beispielsweise auf einem Bildschirm (nicht dargestellt) einzeln, gruppenweise und/oder für bestimmte Entwicklungsstadien angezeigt und manuell ausgewählt werden.

Infolge derartiger bedienerseitiger Eingabe wird die in der Liste 20 jeweils zugeordnete Auswahlregel 17, 18, 19 von der Steuerung 8 automatisch ausgewählt und zur Laufzeitmessung sowie zur darauf basierenden Berechnung des lichten Abstands 11, 12, 13 angewendet.

Die erste Auswahlregel 17 schreibt beispielsweise die Auswahl des jeweils zuerst empfangenen Reflexionsimpulses 10a als Grundlage für die Laufzeitmessung vor. Die zweite Auswahlregel 18 schreibt beispielsweise die Auswahl des Reflexionsimpulses 10b mit der jeweils größten Amplitude U oder Signalstärke 15 als Grundlage für die Laufzeitmessung vor. Die dritte Auswahlregel 19 schreibt beispielsweise die Auswahl des jeweils zuletzt eintreffenden Reflexionsimpulses 10c als Grundlage für die Laufzeitmessung vor.

Zu Beginn der Abstandsmessung zwischen dem Verteilergestänge 1 und dem Pflanzenbestand 4, 5 und/oder Boden 6 kann die jeweils zum Pflanzenbestand 4, 5 und/oder Boden 6 passende Auswahlregel 17, 18, 19 entweder durch manuelle Eingabe der angebauten Frucht und/oder mittels automatischer Erkennung des Pflanzenbestands 4, 5 und/oder des Bodens 6 ausgewählt werden.

Eine manuelle Auswahl ist beispielsweise an der Messeinrichtung 3 und insbesondere an der zugeordneten Steuerung 8 möglich.

Eine automatische Erkennung von Pflanzenbeständen 4, 5 ist beispielsweise durch Vergleich jeweils zusammengehörender Reflexionsimpulse 10a-10c möglich. Beispielsweise kann so die Wuchsform des vorliegenden Pflanzenbestands 4, 5 ermittelt und eine dazu passende Auswahlregel 17-19 automatisch ausgewählt werden. Zur Erkennung einzelner Pflanzenbestände 4, 5 lassen sich charakteristische Abfolgen von Reflexionsimpulsen als Referenz für die jeweils empfangene Abfolge 10 von Reflexionsimpulsen 10a-10c vorgeben.

Bedienern kann durch automatische Erkennung von Pflanzenbeständen 4, 5 gegebenenfalls eine Entscheidungshilfe gegeben werden, welche Auswahlregel 17, 18, 19 im Einzelfall anzuwenden ist.

In der Figur 3 ist beispielhaft für Raps R angedeutet, dass für bestimmte Pflanzenbestände 4, 5 auch Kombinationen und/oder Gewichtungen einzelner bestandspezifischer Auswahlregeln 17, 18 denkbar wären. Eine solche Kombination und/oder Gewichtung könnte dann auch als eigenständige bzw. zusätzliche Auswahlregel verstanden werden. Auch eine dynamische Anpassung von Auswahlregeln 17-19 hinsichtlich des Entwicklungszustands und/oder anderer aktueller Eigenschaften des Pflanzenbestands 4, 5 wäre prinzipiell möglich.

Im gezeigten Beispiel sind die Signalimpulse 9 und die Abfolge 10 von Reflexionsimpulsen 10a-10c jeweils gepulste Ultraschallwellen,. Messeinrichtungen 3 mit insbesondere programmierbaren Ultraschallsensoren 7 haben sich an landwirtschaftlichen Verteilergestängen 1 zur Abstandsmessung prinzipiell bewährt.

Ergänzend oder alternativ wäre eine Laufzeitmessung mit elektromagnetischen Wellen, insbesondere Laserlicht, aber ebenso denkbar. In diesem Fall können optische Signalimpulse am Verteilergestänge 1 ausgesandt, an Pflanzenbeständen 4, 5 und/oder am Boden 6 reflektiert und als Abfolge von Reflexionsimpulsen empfangen lassen. Eine Messeinrichtung mit optischen Sensoren (nicht dargestellt) ließe sich in prinzipiell gleicher Weise für das beschriebene Verfahren unter Anwendung einer bestandspezifischen Auswahlregel einsetzen. Durch die erfindungsgemäße Auswahl einer dem vorliegenden Pflanzenbestand 4, 5 und/oder Boden 6 entsprechenden Auswahlregel 17-19 lässt sich die Zuverlässigkeit der Abstandsmessung zwischen dem Verteilergestänge 1 und dem Pflanzenbestand 4, 5 sowohl für akustische als auch für elektromagnetische Impulse gezielt verbessern. Entsprechend gleichmäßig und präzise kann das Verteilergestänge 1 im Arbeitsbetrieb mit einem Sollabstand zum Pflanzenbestand 4, 5 und/oder Boden 6 geführt werden.

Zudem lässt sich die beschriebene Anwendung einzelner Auswahlregeln 17-19 durch Programmierung jederzeit aktualisieren und daher flexibel an unterschiedliche Anwendungsbedingungen und/oder Pflanzenbestände 4, 5 anpassen.

Die Messeinrichtung 3 weist zu diesem Zweck vorzugsweise programmierbare Sensoren 7 zur Abgabe und zum Empfangen von Signalimpulsen 9 bzw. Reflexionsimpulsen 10a-10c auf. Dadurch können einzelne Auswertealgorithmen auf der Grundlage der beschriebenen Auswahlregeln 17-19 flexibel an vorliegende Pflanzenbestände 4, 5 angepasst werden.

Es versteht sich hierbei von selbst, dass die beispielhaft angegebene Anzahl unterschiedlicher Pflanzenbestände 4, 5 sowie zugehöriger Auswahlregeln 17-19 verändert werden kann, um einzelne Reflexionsimpulse 10a-10c gezielt aus der einem bestimmten Signalimpuls 9 zugeordneten Abfolge 10 auszuwählen und zur Laufzeitmessung zwischen dem Verteilergestänge 1 und dem Pflanzenbestand 4, 5 und/oder dem Boden 6 anzuwenden.

Die Auswahlregeln 17-19 lassen sich ebenso wie die Auswertealgorithmen zur Laufzeitmessung und zur darauf basierenden Abstandsmessung zur Programmierung einer dem Verteilergestänge 1 und/oder der Messeinrichtung 3 zugeordnete n Steuerung 8 verwenden.

Programme mit Auswahlregeln 17-19 können auf herkömmlichen Datenträgern bereitgestellt und auf bekannte Weise in die Steuerung 8 geladen werden.

## Patentansprüche

1. Verfahren zur Abstandsmessung zwischen einem landwirtschaftlichen Verteilergestänge (1) und einem Pflanzenbestand (4, 5) und/oder Boden (6), wobei Laufzeiten (t_{L}) von am Verteilergestänge (1) ausgesandten Signalimpulsen (9) und nach Reflexion am Pflanzenbestand (4, 5) und/oder am Boden (6) empfangenen Reflexionsimpulsen (10a-10c) gemessen werden und daraus ein lichter Abstand (11-13) zum Verteilergestänge (1) hin berechnet wird, wobei beim Empfang einer Abfolge (10) mehrerer einem bestimmten Signalimpuls (9) zugeordneter Reflexionsimpulse (10a-10c) jeweils einer der Reflexionsimpulse (10a-10c) mittels einer programmierten Auswahlregel zur Laufzeitmessung ausgewählt wird, **dadurch gekennzeichnet, dass** die Auswahlregel aus einer gespeicherten Liste (20) mit bestandspezifischen Auswahlregeln (17-19) ausgewählt wird.

2. Verfahren nach Anspruch 1, wobei der relevante Reflexionsimpuls (10a-10c) anhand seines Zeitrangs und/oder seiner Signalstärke (15) aus der Abfolge (10) von Reflexionsimpulsen (10a-10c) ausgewählt wird.

3. Verfahren nach Anspruch 2, wobei der jeweils erste Reflexionsimpuls (10a) oder der Reflexionsimpuls (10b) mit der größten Signalstärke (15) aus der Abfolge (10) der Reflexionsimpulse (10a-10c) auswählt wird.

4. Verfahren nach wenigstens einem der vorigen Ansprüche, wobei die Liste (20) wenigstens eine erste Auswahlregel (17) für Halmfrüchte und eine zweite Auswahlregel (18) für Blattfrüchte enthält.

5. Verfahren nach wenigstens einem der vorigen Ansprüche, wobei die Auswahlregel (17-20) mittels manueller Eingabe an einer dem Verteilergestänge zugeordneten Steuerung (8) aus der Liste (20) bestandspezifisch ausgewählt wird.

6. Verfahren nach wenigstens einem der vorigen Ansprüche, wobei die Auswahlregel (17-20) auf der Grundlage einer maschinellen Erkennung des Pflanzenbestands (4, 5) und/oder Bodens (6) von einer dem Verteilergestänge (1) zugeordneten Steuerung (8) automatisch aus der Liste (20) ausgewählt wird.

7. Verfahren nach Anspruch 6, wobei der Pflanzenbestand (4, 5) und/oder Boden (6) anhand einer für den Pflanzenbestand (4, 5) und/oder Boden (6) charakteristischen Dauer (14), Signalstärke (15) und/oder zeitlichen Reihenfolge empfangener Reflexionsimpulse (10a-10c) erkannt wird.

8. Verfahren nach Anspruch 6 oder 7, wobei der Pflanzenbestand (4, 5) und/oder Boden (6) automatisch auf der Grundlage eines für den Pflanzenbestand (4, 5) und/oder Boden (6) charakteristischen akustischen und/oder elektromagnetischen Reflexionsspektrums erkannt wird.

9. Verfahren nach Anspruch 6, 7 oder 8, wobei der Pflanzenbestand (4, 5) und/oder Boden (6) anhand digitaler Bildaufnahme und Bildauswertung erkannt wird.

10. Verfahren nach wenigstens einem der vorigen Ansprüche, wobei die Signalimpulse (9) und Reflexionsimpulse (10a-10c) Ultraschallwellen und/oder elektromagnetische Wellen umfassen, insbesondere Laserlicht.

11. Verfahren zur Führung eines landwirtschaftlichen Verteilergestänges (1), wobei ein lichter Abstand (11) zur Oberkante (4a) eines Pflanzenbestands (4) und/oder zum Boden (6) mit dem Verfahren nach wenigstens einem der vorigen Ansprüche gemessen und auf dieser Grundlage die Höhe und/oder Neigung des Verteilergestänges (1) geregelt wird, insbesondere zur Einhaltung eines lichten Sollabstands zum Pflanzenbestand (4) und/oder Boden (6).

12. Vorrichtung zur Abstandsmessung zwischen einem landwirtschaftlichen Verteilergestänge (1) und einem Pflanzenbestand (4, 5) und/oder Boden (6), mit wenigstens einer am Verteilergestänge (1) angeordneten Messeinrichtung (3) zur Ermittlung von Laufzeiten (t_{L}) ausgesandter Signalimpulse (9) und nach deren Reflexion am Pflanzenbestand (4, 5) und/oder Boden (6) empfangener Reflexionsimpulse (10a-10c), und zur Berechnung eines lichten Abstands (11-13) zum Verteilergestänge (1) hin, wobei die Vorrichtung konfiguriert ist, beim Empfang einer Abfolge (10) mehrerer einem bestimmten Signalimpuls (9) zugeordneter Reflexionsimpulse (10a-10c) jeweils einen davon zur Laufzeitmessung mittels einer programmierten Auswahlregel auszuwählen, **dadurch gekennzeichnet, dass** die Vorrichtung zur Auswahl der Auswahlregel aus einer gespeicherten Liste (20) mit bestandspezifischen Auswahlregeln (17-19) eingerichtet ist.

13. Feldspritze (2) mit einem Verteilergestänge (1) und der Vorrichtung nach Anspruch 12, und ferner mit einer Steuerung zur Neigungs- und/oder Höhenregelung des Verteilergestänges (1) auf der Grundlage des gemessenen lichten Abstands (11-13).

14. Feldspritze nach Anspruch 13, wobei die Messeinrichtung (3) ferner zur manuellen Eingabe und/oder automatischen Erkennung des zu vorliegenden Pflanzenbestands (4, 5) und/oder Bodens (6) und zur darauf basierenden Auswahl der jeweils anzuwendenden Auswahlregel eingerichtet ist.

15. Speichermedium mit darauf gespeicherten computerlesbaren Instruktionen zum Durchführen eines Verfahrens nach wenigstens einem der Ansprüche 1 bis 11, wenn die Instruktionen auf einem Computer / in einer Steuerung (8) ausgeführt werden.

## Claims

1. Method for measuring the distance between an agricultural spray boom (1) and a crop (4, 5) and/or the ground (6), wherein durations (t_{L}) of signal pulses (9) emitted at the spray boom (1) and, after reflection, reflection pulses (10a-10c) received at the crop (4, 5) and/or on the ground (6) are measured and a clear distance (11-13) from the spray boom (1) is calculated therefrom, wherein, when a plurality of reflection pulses (10a-10c) assigned to a certain signal pulse (9) are received, in each case one of the reflection pulses (10a-10c) is selected by means of a programmed selection rule for the measurement of the duration, **characterized in that** the selection rule is selected from a stored list (20) having crop-specific selection rules (17-19).

2. Method according to Claim 1, wherein the relevant reflection pulse (10a-10c) is selected on the basis of its seniority and/or its signal strength (15) from the sequence (10) of reflection pulses (10a-10c) .

3. Method according to Claim 2, wherein the first reflection pulse (10a) in each case or the reflection pulse (10b) having the greatest signal strength (15) is selected from the sequence (10) of the reflection pulses (10a-10c).

4. Method according to at least one of the preceding claims, wherein the list (20) contains at least one first selection rule (17) for corn and a second selection rule (18) for leaf crops.

5. Method according to at least one of the preceding claims, wherein the selection rule (17-20) is selected crop-specifically from the list (20) by means of manual input at a controller (8) assigned to the spray boom.

6. Method according to at least one of the preceding claims, wherein the selection rule (17-20) is automatically selected from the list (20) by a controller (8), which is assigned to the spray boom (1), on the basis of machine recognition of the crop (4, 5) and/or ground (6).

7. Method according to Claim 6, wherein the crop (4, 5) and/or ground (6) is recognized with reference to a duration (14), signal strength (15) and/or temporal sequence of received reflection pulses (10a-10c) characteristic of the crop (4, 5) and/or ground (6).

8. Method according to Claim 6 or 7, wherein the crop (4, 5) and/or ground (6) is recognized automatically on the basis of an acoustic and/or electromagnetic reflection spectrum characteristic of the crop (4, 5) and/or ground (6).

9. Method according to Claim 6, 7 or 8, wherein the crop (4, 5) and/or ground (6) is recognized with reference to a digital image recording and image evaluation.

10. Method according to at least one of the preceding claims, wherein the signal pulses (9) and reflection pulses (10a-10c) comprise ultrasonic waves and/or electromagnetic waves, in particular laser light.

11. Method for guiding an agricultural spray boom (1), wherein a clear distance (11) from the upper edge (4a) of a crop (4) and/or from the ground (6) is measured with the method according to at least one of the preceding claims and, on the basis thereof, the height and/or inclination of the spray boom (1) is regulated, in particular while maintaining a clear desired distance from the crop (4) and/or ground (6).

12. Device for measuring the distance between an agricultural spray boom (1) and a crop (4, 5) and/or the ground (6), with at least one measuring device (3) arranged on the spray boom (1) for determining durations (t_{L}) of emitted signal pulses (9) and, after reflection thereof, reflection pulses (10a-10c) received at the crop (4, 5) and/or on the ground (6), and for calculating a clear distance (11-13) from the spray boom (1), wherein the device is configured, when a sequence (10) of a plurality of reflection pulses (10a-10c) assigned to a certain signal pulse (9) is received, in each case in order to select one of said reflection pulses by means of a programmed selection rule for measuring the duration, **characterized in that** the device is configured for selecting the selection rule from a stored list (20) having crop-specific selection rules (17-19).

13. Field sprayer (2) with a spray boom (1) and the device according to Claim 12 and furthermore with a controller for regulating the inclination and/or height of the spray boom (1) on the basis of the measured clear distance (11-13).

14. Field sprayer according to Claim 13, wherein the measuring device (3) is furthermore configured for the manual inputting and/or automatic recognition of the crop (4, 5) and/or ground (6) present and for the selection on the basis thereof of the selection rule to be used in each case.

15. Storage medium with computer-readable instruction stored thereon for carrying out a method according to at least one of Claims 1 to 11 when the instructions are executed on a computer/in a controller (8).

## Revendications

1. Procédé de mesure de la distance entre une rampe de distribution agricole (1) et une culture végétale (4, 5) et/ou un sol (6), les temps de propagation (t_{L}) d'impulsions de signal (9) émises sur la rampe de distribution (1) et d'impulsions de réflexion (10a-10c) reçues après réflexion sur la culture végétale (4, 5) et/ou sur le sol (6) étant mesurés et à partir de là une distance libre (11-13) étant calculée par rapport à la rampe de distribution (1), lors de la réception d'une séquence (10) de plusieurs impulsions de réflexion (10a-10c) associées à une impulsion de signal déterminée (9) l'une des impulsions de réflexion (10a-10c) étant sélectionnée au moyen d'une règle de sélection programmée pour la mesure du temps de propagation, **caractérisé en ce que** la règle de sélection est sélectionnée dans une liste mémorisée (20) de règles de sélection (17-19) spécifiques à la culture.

2. Procédé selon la revendication 1, l'impulsion de réflexion pertinente (10a-10c) étant choisie dans la séquence (10) d'impulsions de réflexion (10a-10c) sur la base de son rang temporel et/ou de son intensité de signal (15).

3. Procédé selon la revendication 2, la première impulsion de réflexion respective (10a) ou l'impulsion de réflexion (10b) ayant la plus grande intensité de signal (15) étant sélectionnée dans la séquence (10) d'impulsions de réflexion (10a-10c).

4. Procédé selon l'une au moins des revendications précédentes, la liste (20) contenant au moins une première règle de sélection (17) pour les céréales et une deuxième règle de sélection (18) pour les plantes à feuilles.

5. Procédé selon l'une au moins des revendications précédentes, la règle de sélection (17-20) étant sélectionnée dans la liste (20) d'une manière spécifique à la culture par une entrée manuelle effectuée au niveau d'une commande (8) associée à la rampe de distribution.

6. Procédé selon l'une au moins des revendications précédentes, la règle de sélection (17-20) étant sélectionnée automatiquement dans la liste (20) par une commande (8), associée à la rampe de distribution (1), sur la base d'une reconnaissance par machine de la culture végétale (4, 5) et/ou du sol (6).

7. Procédé selon la revendication 6, la culture végétale (4, 5) et/ou le sol (6) étant reconnus sur la base d'une durée (14), d'une intensité de signal (15) et/ou d'une séquence temporelle d'impulsion de réflexion reçues (lOa-lOc) caractéristiques de la culture végétale (4, 5) et/ou du sol (6).

8. Procédé selon la revendication 6 ou 7, la culture végétale (4, 5) et/ou le sol (6) étant reconnus automatiquement sur la base d'un spectre de réflexion acoustique et/ou électromagnétique caractéristique de la culture végétale (4, 5) et/ou du sol (6).

9. Procédé selon la revendication 6, 7 ou 8, la culture végétale (4, 5) et/ou le sol (6) étant reconnus au moyen d'un enregistrement d'image numérique et d'une évaluation d'image numérique.

10. Procédé selon l'une au moins des revendications précédentes, les impulsions de signal (9) et les impulsions de réflexion (10a-10c) comprenant des ondes ultrasonores et/ou des ondes électromagnétiques, en particulier une lumière laser.

11. Procédé de guidage d'une rampe de distribution agricole (1), une distance libre (11) par rapport au bord supérieur (4a) d'une culture végétale (4) et/ou au sol (6) étant mesurée avec le procédé selon l'une au moins des revendications précédentes et la hauteur et/ou l'inclinaison de la rampe de distribution (1) étant réglée sur la base de la distance libre, en particulier pour maintenir une distance libre de consigne par rapport à la culture végétale (4) et/ou au sol (6).

12. Dispositif de mesure de la distance entre une rampe de distribution agricole (1) et une culture végétale (4, 5) et/ou un sol (6), ledit dispositif comprenant au moins un moyen de mesure (3) disposé au niveau de la rampe de distribution (1) pour déterminer des temps de propagation (t_{L}) d'impulsions de signal émis (9) et d'impulsions de réflexion (10a-10c) reçues après leur réflexion sur la culture végétale (4, 5) et/ou le sol (6) et pour calculer une distance libre (11-13) par rapport à la rampe de distribution (1), le dispositif étant conçu pour sélectionner, lors de la réception d'une séquence (10) de plusieurs impulsions de réflexion (10a-10c) associées à une impulsion de signal déterminée (9), l'une de ces impulsions pour mesurer le temps de propagation au moyen d'une règle de sélection programmée, **caractérisé en ce que** le dispositif est adapté pour sélectionner la règle de sélection à partir d'une liste mémorisée (20) de règles de sélection (17-19) spécifiques à la culture.

13. Pulvérisateur agricole (2) muni d'une rampe de distribution (1) et du dispositif selon la revendication 12, et en outre d'une commande destinée à régler l'inclinaison et/ou la hauteur de la rampe de distribution (1) sur la base de la distance libre mesurée (11-13).

14. Pulvérisateur agricole selon la revendication 13, le dispositif de mesure (3) étant en outre conçu pour effectuer une entrée manuelle et/ou une reconnaissance automatique de la culture végétale présente (4, 5) et/ou du sol (6) et pour sélectionner à partir de là la règle de sélection à appliquer.

15. Support de stockage sur lequel sont mémorisées des instructions lisibles par ordinateur destinées à exécuter un procédé selon l'une au moins des revendications 1 à 11, lorsque les instructions sont exécutées sur un ordinateur/dans une commande (8).
